# EUROPEAN PATENT SPECIFICATION

(11) **EP 0 752 776 B1**
(45) Date of publication and mention of the grant of the patent: **16.11.2005**
(21) Application number: 96850120.5
(22) Date of filing: 26.06.1996
(51) Int. Cl.: H04L 12/42

(54) **Network architecture**
Netzwerkarchitektur
Architecture de réseau

(30) Priority: 06.07.1995 SE 9502466
(43) Date of publication of application: 08.01.1997
(73) Proprietor: TELIA AB, 123 86 Farsta (SE)
(72) Inventor: Hagström, Bengt, 125 33 Älvsjö (SE)
(74) Representative: Hopfgarten, Nils

(56) References cited:
- EP-A- 0 616 479
- WO-A-92/04787
- FROITZHEIM K ET AL: "VIRTUELLE RINGTOPOLOGIEN IN MODERNEN ISDN-KOMMUNIKATIONSSYSTEMEN" NTZ (NACHRICHTENTECHNISCHE ZEITSCHRIFT), VDE VERLAG GMBH. BERLIN, DE, vol. 43, no. 9, 1 September 1990 (1990-09-01), pages 656-658,660-66, XP000160568 ISSN: 0027-707X
- IGLEHEART J.D.; CROSS D.N.: 'Digital cross-connect deployment opportunities' IEEE GLOBAL TELECOMMUN CONF AND EXHIB COMMUN FOR THE INF AGE CONF REC 28 November 1988, PUBL BY IEEE, NEW YORK, NY, USA, pages 1564 - 1568

## Description

### TECHNICAL FIELD

The present invention provides a method to increase the traffic capacity in an existing telecommunication network element by reconfiguring the network element as a ring with a distributed switching function. The capacity of an existing ring network also can be increased by the use of a variant of the method. In the invention also is implied that one in certain cases creates a new network configuration. Existing telecommunication networks include star or mesh configurations in which the connection functions in the network are concentrated to network nodes. Such networks can be transformed into ring networks by uniting the arms which extend from a connection node, to create a ring by using as much as possible of the existing transmission route and to introduce one more route to connect the ends of the original arms. The existing network switches, for instance telephone exchanges can be distributed as distributed switches in the form of channel allocators in suitable points in the network. Such a network har the physical form of a ring, but can be logically configured in a way that it operates as a logic star or mesh network.

When there is a need to expand the traffic transmission capacity of an existing ring network, the ring can be divided into two rings which are linked together by a channel allocator. This process can be imagined as a cutting off of an existing ring, causing it to divide about in the same way as a biological cell-division. Further increase of capacity can be produced by providing an external ring round the two existing rings. This is supposed to be a new network configuration.

Ring networks are previously known. They are often used as a means to provide LANs (local networks). Such rings typically operate as systems with allocated access, in which addressed data packets are transmitted round the ring and are kept by an addressed data terminal. A lot of methods to connect ring networks are known.

WO 92/04787 discloses a self-healing meshed network using logical ring structures. The network comprises a plurality of hybrid ring segments each propagating multiplexed subchannels, a plurality of add-drop multiplexer nodes, and a plurality of cross-connect nodes, said segment and nodes being arranged to maintain subchannels even in the presence of a failure of any one of said hybrid ring segments by rearranging the connection of said multiplexed subchannels.

Froitzheim K et. al: "Virtuellle Ringtopologien in modernen ISDN-Kommunikationssystem" NTZ, VDE Verlag GMBH, Berlin, DE, vol. 43, no. 9, 1 September 1990, pages 656-658, 660-66, XP000160568 ISSN: 0027-707X discloses the use of ring structures in ISDN systems.

Existing telecommunications networks use star and/or mesh networks. Such networks are constructed of a lot of transmission media, such as radio links, twisted coppar cable, optical transmission systems, coaxial cable etc. Networks of this type are characterized by the use of big and expensive central switches or telephone exchanges located at nodes in the network. In many telecommunication systems the networks have a number of layers, i.e. by and by as the traffic need increases, a new network is constructed which operates above the existing network and is linked to this at the existing network nodes. This leads to an increasing complexity which makes the networks vulnerable to transmission failure in important transmission links. A national network can also be divided in different levels, for instance the trunk network which is used for transmission of concentrated traffic over considerable geographical distances, connection networks which are used for transmission of traffic between telephone exchanges, and the local network which is used for transmission of traffic to individual subscribers. Handling of such telecommunication networks gives the telecommunication operator a formidable task. The investment in existing networks is in fact very big and cannot quite simply be disregarded.

### TECHNICAL PROBLEM

The telecommunication networks of today are generally constructed as mesh and/or star networks. In the systems centrally located exchanges or switching functions are included. The exchanges/switching functions serve a large number of subscribers within a geographical area. Other stations in their turn serve a number of subordinate stations. To bridge errors or overloads in the network, the different stations are given different connection possibilities to different superior stations. The capacity of these connections are, however, in many cases insufficient if one of these connections between superior and subordinate stations is broken. Faults in the stations also have extensive consequences for the subscribers which are connected to said station. At a drop-out of a station several thousands of subscribers can be excluded from communication possibilities. Corresponding problems will also arise on higher a level in the telecommunication system if vital cables or stations are disabled for different reasons. A reconfiguration of the traffic routes reduces the available traffic capacity, and blockings in the networks will arise. Consequently there is s need to reduce the vulnerability of the network. The present invention has the intention to solve said problem.

Further there is a want to transform existing telecommunication networks to ring networks at which the vulnerablilty in the network can be reduced. The present invention indicates a method to overcome this problem.

### THE SOLUTION

The present invention relates to a method to increase the traffic transmission capacity of connected star or mesh telecommunication network. At least a part of the network is transformed into a ring networks. At least two existing transmission routes in said network are connected to create at least one continuous transmission ring. The swithing functions of the telephone exchanges of said network are replaced by channel allocation devices. The traffic transmission capacity of a telecommunication network which includes a transmission ring is increased by shaping said one transmission ring to at least two transmission rings, by providing transmission bridges over said transmission ring. The transmission rings are consequently separated into two adjacent transmission rings. The two adjacent transmission rings are connected by a connection device. Said connection device includes a channel allocation device arranged to provide a switching function. A third transmission ring is created which connects two adjacent transmission rings. Connection of two adjacent transmission rings with said third transmission ring is made with connection devices, which connection devices include channel allocation devices. Channel allocation devices are provided in said transmission rings, which channel allocation devices provide a distributed switching function for said ring network. Traffic distribution devices are provided in said transmission rings. The traffic distribution devices allow telecommunication traffic to enter and leave said transmission rings. The traffic allocation device includes channel allocation devices.

The invention further relates to a method to increase the traffic transmission capacity of a telecommunication network which includes a number of transmission routes. Existing transmission routes are bridged to produce a new continuous ring transmission route.

The invention further relates to a telecommunication network which includes a distributed switching function. The transmission network includes at least a first, a second and a third transmission ring, which first and second transmission rings are connected with said third transmission ring. The first, second and third transmission rings are connected by a connection device. At least the first and the second transmission rings are equipped with traffic distribution devices, which makes it possible for telecommunication traffic to enter and leave first respective second transmission rings. The connection devices and the traffic distribution devices include channel allocation devices to provide a traffic switching function. The traffic distribution device is arranged to receive traffic from, and forward traffic to, a lot of transmission media, inclusive optical fibre, coaxial cable, twisted pair cable and radio links, in digital and/or analog form. The transmission devices are further arranged to allow telecommunication signals to be transmitted through said transmission rings in two opposite directions. In a further development of the invention is further provided a central network control device to control the function of said channel allocation devices. The network can be arranged to have a number of distinct logical topographies, and central network control devices are arranged to control said network logical topography. The logical topography includes star and mesh configurations.

### ADVANTAGES

The present invention makes it possible that existing networks can be modified in a simple way at a comparatively low cost, resulting in that the advantages of ring networks and distributed switching can be obtained without abandoning the existing investment in the transmission plant.

Ring networks has the advantage of a simplified structure, compared with star and mesh networks and they can be constructed with use of a distributed switching at low cost. Furthermore they are less affected by errors in an individual transmission link because there are always two transmission directions for information carrying signals round a ring. Moreover they can in a simple way be logically configured making them in operation similar to the behaviour of star and mesh networks.

The ring network structure further allows that alternative routes can be obtained as a change of traffic direction. This is an advantage at errors in the network. Change of traffic direction in the network has been performed by logical measures, at which the handling is simplified. The fact that the same type of equipments can be utilized in large parts of the network results in that the need for different types of equipments is minimized. This entails that the complexity is reduced and that the staff which administers the networks to a less extent need to be specialized within different fields. The suggested solution further gives a simplified routing, at errors in the network the invention consequently allows that simple handling is obtained. The suggested solution is furthermore easy to implement.

The solution further allows that the information is transmitted to all in the telecommunication network, broadcasting, or to a selected group multicasting. One more advantage is that conference telephony in a simple way can be established without the need to establish special connections at for instance video telephony.

### DESCRIPTION OF FIGURES

Figure 1 shows a ring network.
Figure 2 shows a ring network which is divided.
Figure 3 shows a ring network which has been divided into two ring networks.
Figure 4 shows a ring network.
Figure 5 shows example of how a conventional network is reconfigured into a ring network.

### DETAILED EMBODIMENT

A typical ring network includes a number of transmission rings arranged in parallel with each other. Information is transmitted in the ring in packets or time slots arranged in accordance with a system protocol. It is possible to transmit data in the ring in two opposite directions. This means that if a drop-out occurs at any point in the ring, the communication is not completely lost, but recovery can immediately be obtained by a logical reconstruction of the ring. The degree of recovery can be dimensioned.

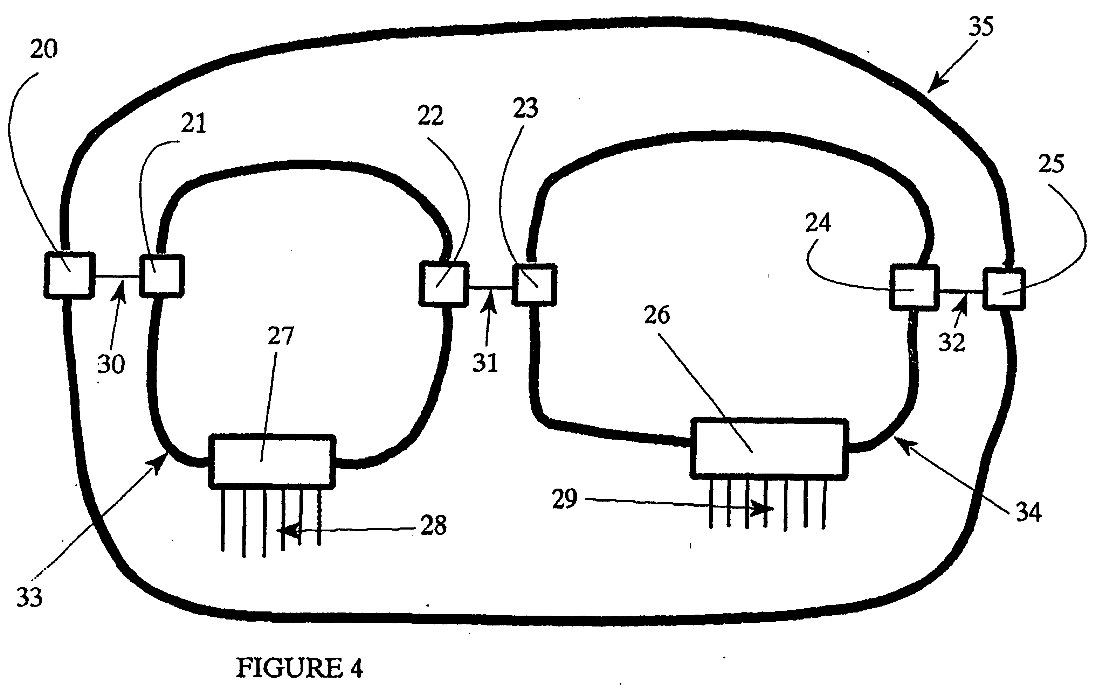

One consequently can gain significant advantages by transforming existing star and/or mesh telecommunication networks into ring networks. One way to obtain this is illustrated in Figure 5. A part of a typical telecommunication star network is shown and it includes telephone exchanges 5, 8 and 9 linked up with transmission routes 6 and 7. It should be noticed that a typical telephone exchange is a very expensive equipment which is specifically constructed for the special place where it is located. Further, a drop-out in the transmission route 7 or 6 results in complete isolation of the exchange 8 or 9. By linking up the ends of the transmission routes 7 and 6 with a transmission route 11, and to bypass the exchanges 5, 8 and 9, a transmission ring 10 is however created. The switching functions of the telephone exchanges 5, 8 and 9 are replaced by channel allocation devices which are described later with references to Figure 4. It should however be noticed that traffic allocation devices can have a standard construction which is not unique for their location. The transformance of the elements in the star network, shown in Figure 5, to a transmission ring increases the traffic transmission capacity of the network and makes it less affected by transmission errors. Obviously the point where the link 11 is physically placed should be chosen in a way that the physical length of the transmission route 11 is minimized with regard to an optimal utilization.

The use of the ring creation method, outlined above, makes possible an increase of the traffic transmission capacity of the network at as little as 4% of the cost in relation to the same increase of the traffic transmission capacity in a traditional network with use of traditional technologies.

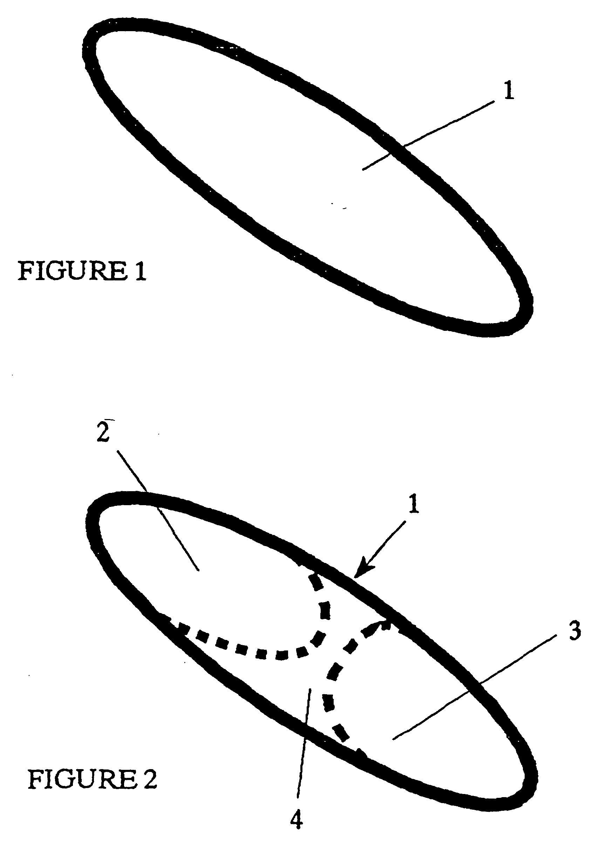

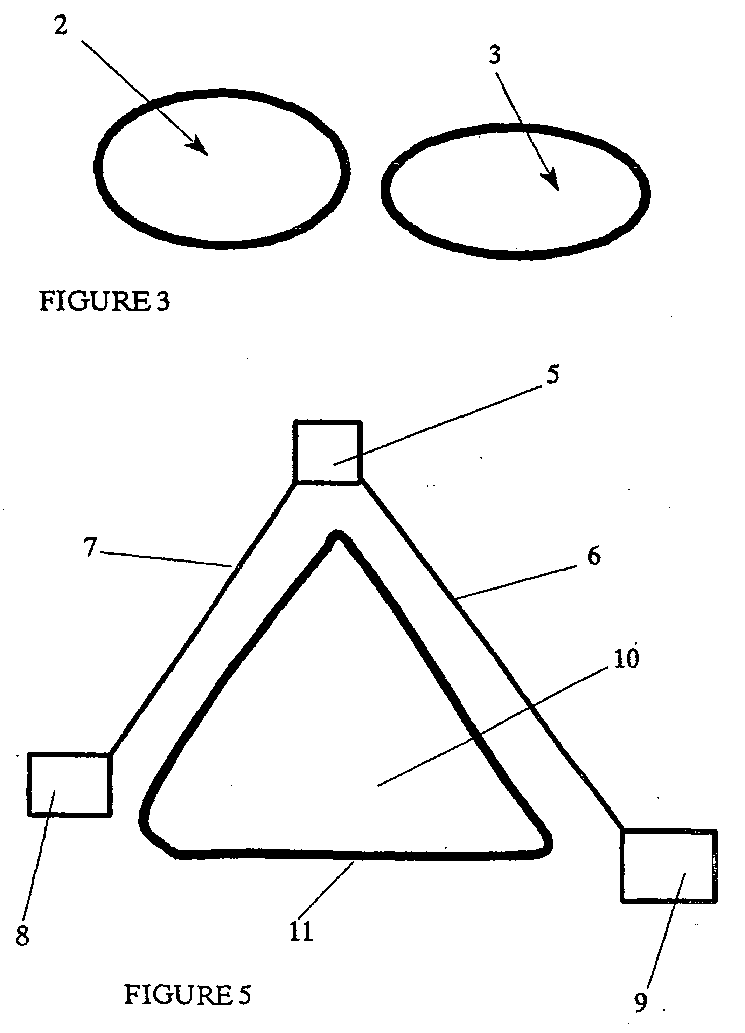

It can of course be necessary to increase the traffic transmission capacity of an existing ring network. This process is illustrated in the Figures 1-4. Figure 1 shows an existing transmission ring 1, the traffic capacity of which must be extended. The first step in the process is to tie up the ring 1 at 4, as is shown in Figure 2, to create rings 2 and 3. This process is performed by adding new transmission routes. Alternatively the process can be imagined as a bridging of te existing ring with two transmission routes. The two rings are then separated in order to create two independent rings 2 and 3, as is shown in Figure 3. The final shape of the ring transmission network, arranged by creating the two rings 2 and 3, is shown in Figure 4. A new ring, in which two central rings (the rings 2 and 3 in Figure 3) are arranged, has now been created. In Figure 4 the two central rings are marked 33 and 34, and the outer ring 35. The ring 35 feeds information to and from the rings 33 and 34. In other words it provides the link between the rings 33 and 34 and the rest of the transmission network. It is quite evident from the ring structure shown in Figure 4 that a drop-out of a given transmission element results in a certain loss of the traffic capacity of the network, but does not result in a total break of communication. This is a difference from the situation in a conventional star network in which the drop-out of a transmission element results in a significant and serious loss of traffic capacity, if not total break of communication between at least certain nodes in the network.

The rings 33, 34 and 35 in Figure 4 are connected by switching devices 30, 31 and 32. These switching devices include channel allocation devices which distribute the telecommunication traffic to the accessible communication channels in the rings. When time shared multiplexing is used, these channels are defined by time slots. Of course just any suitable form of multiplexing can be used for transmission round a ring transmission route, inclusive packet transmission. When addressed packets are used, channel allocation can be performed locally without central control, but in other cases a central control unit is needed, not shown in Figure 4, to control channel allocation in a way that the traffic is correctly routed through the ring system. When a central control unit is used, it is the central control unit that decides which channels shall be used for corresponding elements in the traffic. The central control unit then signals to the channel allocation devices, and the channel allocation devices allocate traffic to different channels in accordance with the instructions which are contained in the received signals. The central control unit can allocate channels to given users and decide the bandwidth that shall be available to every user, together with other service facilities which shall be made accessible to this user.

The channel allocation devices can transform and select information which is received in a part of the network for transmission to another part of the network. Channel allocation devices also can have the ability to change the transmitted form of the information form one type to another. For example they can change line codes, data format or protocol, multiplexing structure etc. Especially the distribution devices 28 and 29, shown in Figure 4, which include channel allocation devices, may need to communicate with the rings 26 and 27 with a lot of transmission media inclusive radio links, fibre optical cables, twisted coppar cables, coaxial cables etc. Data which are received at or transmitted from the distribution devices 28 and 29 either can be in analog or digital form. The central control unit can change the logical configuration of the ring network making it to imitate different physical network structures such as mesh or star networks. This reconfiguration is obtained by control of the channel allocation devices.

## Claims

1. Method to increase the traffic transmission capacity of switched star or meshed telecommunication networks, comprising transforming at least part of said network to a ring network, by connecting at least two existing transmission routes in said network to create at least one continuous transmission ring (11), forming said one transmission ring to at least two transmission rings (33, 34) by providing transmission bridges (22, 23) over said transmission ring, which consequently separate said transmission ring into two adjacent transmission rings, linking up said two adjacent transmission rings by a switching device (31), replacing the switching functions of the telephone exchanges of said network by channel allocation devices, and providing traffic distribution devices (28, 29) in said transmission rings, where traffic distribution devices allow telecommunication traffic to enter and leave said transmission rings, **characterized in** including channel allocationdevices in said switching device (31) and said traffic distribution devices (28, 29) to provide a switching function.

2. Method according to claim 1, **characterized in** creating a third transmission ring which connects said two adjacent transmission rings.

3. Method according to claim 2, **characterized in** linking up said two adjacent transmission rings to said third transmission ring by switching devices, which switching devices include channel allocation devices.

4. Method according to any of the claims 1-3, **characterized in** providing channel allocation devices in said transmission rings, which channel allocation devices provide a distributed function for said ring network.

5. Telecommunication transmission network comprising a distributed switching function, said transmission network including at least a first (33), a second (34) and a third (35) transmission ring, which first and second transmission rings are connected with said third transmission ring, and said first, second and third transmission rings are connected by a switching device (30, 31, 32) at least said first and second transmission rings being equipped with traffic distribution devices (28, 29) via which telecommunication traffic enters and leaves said first and second transmission rings, **characterized in that** said switching devices (30, 31, 32) and traffic distribution devices (28, 29) include channel allocation devices to provide a traffic switching function.

6. Telecommunication transmission network according to claim 5, **characterized in that** there is provided a central network control device to control the function of said channel allocation devices.

7. Telecommunication transmission network according to claim 6, **characterized in that** said network can be arranged to have a number of distinct logical topographies, and said central network control device is arranged to control said logical topographies of said network.

8. Telecommunication transmission network according to claim 7, **characterized in that** said logical topographies include star and/or mesh configurations.

9. Telecommunication transmission network according to any of the claims 5-8, **characterized in that** said traffic distribution device is arranged to receive traffic from, and forward traffic to, several transmission media inclusive optical fibres, coaxial cables, twisted pair cables and radio links, in digital and/or analog form.

10. Telecommunication transmission network according to any of the claims 5-9, **characterized in that** said transmission rings are arranged to allow telecommunication signals to propagate round said transmission rings in two opposite directions.

## Patentansprüche

1. Verfahren zum Steigern der Verkehrsübertragungskapazität von vermittelten Stern- oder Maschen-Telekommunikationsnetzen mit Umformen von mindestens einem Teil des Netzes in ein Ringnetz durch Verbinden von mindestens zwei bestehenden Übertragungswegen in dem Netz zum Erzeugen von mindestens einem kontinuierlichen Übertragungsring (11), Formen des einen Übertragungsrings in mindestens zwei Übertragungsringe (33, 34) durch Bereitstellung von Übertragungsbrücken (22, 23) über den Übertragungsring, die infolge dessen den Übertragungsring in zwei benachbarte Übertragungsringe trennen, Verknüpfen der zwei benachbarten Übertragungsringe durch eine Vermittlungseinrichtung (31), Ersetzen der Vermittlungsfunktionen der Fernsprechvermittlungsstellen des Netzes durch Kanalzuteilungseinrichtungen, und Bereitstellen von Verkehrsverteilungseinrichtungen (28, 29) in den Übertragungsringen, wobei die Verkehrsverteilungseinrichtungen zulassen, dass der Kommunikationsverkehr in die Übertragungsringe eintritt und sie verläßt, **gekennzeichnet durch** Einschließen der Kanalzuteilungseinrichtungen in die Vermittlungseinrichtungen (31) und der Verkehrsverteilungseinrichtungen (28, 29) zur Bereitstellung einer Vermittlungsfunktion.

2. Verfahren nach Anspruch 1, **gekennzeichnet durch** Erzeugen eines dritten Übertragungsringes, der die zwei benachbarten Übertragungsringe verbindet.

3. Verfahren nach Anspruch 2, **gekennzeichnet durch** Verknüpfen der zwei benachbarten Übertragungsringe mit dem dritten Übertragungsring **durch** Vermittlungseinrichtungen, welche Vermittlungseinrichtungen Kanalzuteilungseinrichtungen enthalten.

4. Verfahren nach einem der Ansprüche 1 bis 3, **gekennzeichnet durch** Bereitstellen von Kanalzuteilungseinrichtungen in den Übertragungsringen, wobei die Kanalzuteilungseinrichtungen eine verteilte Funktion für das Ringnetz bereitstellen.

5. Telekommunikationsübertragungsnetz mit einer verteilten Vermittlungsfunktion, welches Übertragungsnetz mindestens einen ersten (33), einen zweiten (34) und einen dritten (35) Übertragungsring enthält, wobei die ersten und zweiten Übertragungsringe mit dem dritten Übertragungsring verbunden sind und die ersten, zweiten und dritten Übertragungsringe durch eine Vermittlungseinrichtung (30, 31, 32) verbunden sind, wobei mindestens die ersten und zweiten Übertragungsringe mit Verkehrsverteilungseinrichtungen (28, 29) ausgerüstet sind, über die Telekommunikationsverkehr in die ersten und zweiten Übertragungsringe eintritt und sie verläßt, **dadurch gekennzeichnet, dass** die Vermittlungseinrichtungen (30, 31, 32) und Verkehrsverteilungseinrichtungen (28, 29) Kanalzuteilungseinrichtungen zur Bereitstellung einer Verkehrsvermittlungsfunktion enthalten.

6. Telekommunikationsübertragungsnetz nach Anspruch 5, **dadurch gekennzeichnet, dass** eine zentrale Netzsteuerungseinrichtung zur Steuerung der Funktion der Kanalzuteilungseinrichtungen bereitgestellt wird.

7. Telekommunikationsübertragungsnetz nach Anspruch 6, **dadurch gekennzeichnet, dass** das Netz mit einer Anzahl von ausgeprägten logischen Topographien angeordnet werden kann und dass die zentrale Netzsteuerungseinrichtung zum Steuern der logischen Topographien des Netzes angeordnet ist.

8. Telekommunikationsübertragungsnetz nach Anspruch 7, **dadurch gekennzeichnet, dass** die logischen Topographien Stern- und/oder Maschenkonfigurationen enthalten.

9. Telekommunikationsübertragungsnetz nach einem der Ansprüche 5-8, **dadurch gekennzeichnet, dass** die Verkehrsverteilungseinrichtung zum Empfangen von Verkehr von und Weiterleiten von Verkehr zu mehreren Übertragungsmedien einschließlich von Lichtleitfasern, Koaxialkabeln, Twisted-Pair-Kabeln und Funkstrecken in Digital- und/oder Analogform angeordnet ist.

10. Telekommunikationsübertragungsnetz nach einem der Ansprüche 5-9, **dadurch gekennzeichnet, dass** die Übertragungsringe so angeordnet ist, dass sie die Fortpflanzung von Telekommunikationssignalen um die Übertragungsringe herum in zwei entgegengesetzten Richtungen zulassen.

## Revendications

1. Procédé d'augmentation de la capacité de transmission de trafic de réseaux de télécommunications commutés en étoile ou maillés, comprenant la transformation d'au moins une partie du dit réseau en un réseau en anneau, par connexion d'au moins deux routes de transmission existantes dans le dit réseau de façon à créer au moins un anneau de transmission continu (11), formation du dit un anneau de transmission en au moins deux anneaux de transmission (33, 34) par création de ponts de transmission (22, 23) sur le dit anneau de transmission, qui séparent donc le dit anneau de transmission en deux anneaux de transmission adjacents, liaison des dits deux anneaux de transmission adjacents par un dispositif de commutation (31), remplacement des fonctions de commutation des centraux téléphoniques du dit réseau par des dispositifs d'attribution de canal, et création de dispositifs de distribution de trafic (28, 29) dans les dits anneaux de transmission, de sorte que les dispositifs de distribution de trafic permettent au trafic de télécommunication d'entrer et de sortir des dits anneaux de transmission, **caractérisé par** l'inclusion de dispositifs d'attribution de canal dans le dit dispositif de commutation (31) et les dits dispositifs de distribution de trafic (28, 29) pour procurer une fonction de commutation.

2. Procédé selon la revendication 1, **caractérisé par** la création d'un troisième anneau de transmission qui connecte les dits deux anneaux de transmission adjacents.

3. Procédé selon la revendication 2, **caractérisé par** la liaison des dits deux anneaux de transmission adjacents au dit troisième anneau de transmission par des dispositifs de commutation, ces dispositifs de commutation incluant des dispositifs d'attribution de canal.

4. Procédé selon une quelconque des revendications 1 à 3, **caractérisé en ce que** des dispositifs d'attribution de canal sont prévus dans les dits anneaux de transmission, ces dispositifs d'attribution de canal procurant une fonction répartie pour le dit réseau en anneau.

5. Réseau de transmission de télécommunications comprenant une fonction de commutation répartie, le dit réseau de transmission incluant au moins un premier (33), un deuxième (34) et un troisième (35) anneaux de transmission, les premier et deuxième anneaux de transmission étant connectés au dit troisième anneau de transmission, et les dits premier, deuxième et troisième anneaux de transmission étant connectés par un dispositif de commutation (30, 31, 32), au moins les dits premier et deuxième anneaux de transmission étant équipés avec des dispositifs de distribution de trafic (28, 29) par l'intermédiaire desquels le trafic de télécommunication entre et sort des dits premier et deuxième anneaux de transmission, **caractérisé en ce que** les dits dispositifs de commutation (30, 31, 32) et les dits dispositifs de distribution de trafic (28, 29) comprennent des dispositifs d'attribution de canal pour procurer une fonction de commutation de trafic.

6. Réseau de transmission de télécommunications selon la revendication 5, **caractérisé en ce qu'**il est prévu un dispositif de commande de réseau central pour commander la fonction des dits dispositifs d'attribution de canal.

7. Réseau de transmission de télécommunications selon la revendication 6, **caractérisé en ce que** le dit réseau peut être agencé de manière à avoir plusieurs topographies logiques distinctes, et le dit dispositif de commande de réseau central est agencé pour commander les dites topographies logiques du dit réseau.

8. Réseau de transmission de télécommunications selon la revendication 7, **caractérisé en ce que** les dites topographies logiques comprennent des configurations en étoile et/ou maillées.

9. Réseau de transmission de télécommunications selon une quelconque des revendications 5 à 8, **caractérisé en ce que** le dit dispositif de distribution de trafic est agencé pour recevoir un trafic et expédier un trafic en provenance et à destination de plusieurs moyens de transmission incluant des fibres optiques, des câbles coaxiaux, des câbles à paires torsadées et des liaisons radio, sous forme numérique et/ou analogique.

10. Réseau de transmission de télécommunications selon une quelconque des revendications 5 à 9, **caractérisé en ce que** les dits anneaux de transmission sont agencés pour permettre la propagation de signaux de télécommunication autour des dits anneaux de transmission dans deux directions opposées.
